# EUROPEAN PATENT APPLICATION

(11) **EP 3 599 158 A1**
(43) Date of publication of application: **29.01.2020**
(21) Application number: 19186295.2
(22) Date of filing: 15.07.2019
(51) Int. Cl.: B64C 7/00, B64C 11/14, B64C 27/00, B64C 27/72

(54) **HEAT DISSIPATION SYSTEM FOR ROTOR MOUNTED ELECTRONICS**

(30) Priority: 24.07.2018 US 201816043806
(71) Applicant: Sikorsky Aircraft Corporation, Stratford, CT 06615 (US)
(72) Inventor: SUTTON, Christopher M., Milford, CT Connecticut 06460 (US); MAYRIDES, Bryan D., Trumbull, CT Connecticut 06611 (US); WELSH, William A., North Haven, CT Connecticut 06473 (US); D'ANNA, Frank P., Seymour, CT Connecticut 06483 (US)
(74) Representative: Schmitt-Nilson Schraud Waibel Wohlfrom Patentanwälte Partnerschaft mbB

(57) **Abstract**

A hub for a rotary wing aircraft includes a plurality of rotor blades, and a heat dissipation system including an aerodynamic faring arranged outwardly of the hub. The aerodynamic fairing has an outer surface and an inner surface defining a component receiving zone. An electronic component is mounted to the inner surface of the aerodynamic faring in the component receiving zone.

## Description

The subject matter disclosed herein generally relates to the art of rotary wing aircraft and, more particularly, to a heat dissipation system for rotor mounted electronics in a rotary wing aircraft.

Rotary wing aircraft often times employ actuators to adjust one or more attributes of a corresponding rotor blade. The actuators, typically electro-mechanical actuators (EMA) include both control circuitry that provide desired control inputs, and power circuitry, that provides power to enable the desired control inputs. The actuators may form part of an individual blade control (IBC) system. IBC is the concept of replacing the traditional helicopter control system (in which a 'swashplate' controls the motion of all blade simultaneously) with one electromechanical actuator for each blade such that each blade can be controlled independently from the others. In operation, both the control circuitry and the power circuitry generate heat. It is desirable to dissipate the heat in order to increase system capabilities and to prolong an overall operational life of the circuitry.

According to an embodiment, a hub for a rotary wing aircraft includes a plurality of rotor blades, and a heat dissipation system including an aerodynamic faring arranged outwardly of the hub. The aerodynamic fairing has an outer surface and an inner surface defining a component receiving zone. An electronic component is mounted to the inner surface of the aerodynamic faring in the component receiving zone.

In addition to one or more of the features described above, or as an alternative, in further embodiments the electronic component closely conforms to the inner surface of the aerodynamic faring.

In addition to one or more of the features described above, or as an alternative, in further embodiments a plurality of electromechanical actuators is mounted to the hub and wherein the electronic component comprises a plurality of electronic components. Each of the plurality of electromechanical actuators is operatively connected to a corresponding one of the plurality of electronic components.

In addition to one or more of the features described above, or as an alternative, in further each of the plurality of electromechanical actuators are operatively connected to a corresponding one of the plurality of rotor blades.

In addition to one or more of the features described above, or as an alternative, in further embodiments a cover member extends across the aerodynamic faring enclosing the component receiving zone.

In addition to one or more of the features described above, or as an alternative, in further embodiments the cover member creates a trapped air volume in the component receiving zone.

In addition to one or more of the features described above, or as an alternative, in further embodiments the cover member includes one or more vents forming a circulating air volume in the component receiving zone.

In addition to one or more of the features described above, or as an alternative, in further embodiments the aerodynamic faring is spaced from the hub through a mounting flange.

In accordance with another exemplary embodiment, a rotary wing aircraft includes a fuselage including an extending tail, a prime mover mounted to the fuselage, a gearbox mechanically connected to the prime mover, and a main rotor system mounted to the fuselage and mechanically connected to the gearbox. The main rotor system including a rotor hub including a plurality of rotor blades and an aerodynamic faring arranged outwardly of the rotor hub. The aerodynamic fairing has an outer surface and an inner surface defining a component receiving zone. An electronic component is mounted to the inner surface of the aerodynamic faring in the component receiving zone.

In addition to one or more of the features described above, or as an alternative, in further embodiments the electronic component closely conforms to the inner surface of the aerodynamic faring.

In addition to one or more of the features described above, or as an alternative, in further embodiments a plurality of electromechanical actuators is mounted to the rotor hub and the electronic component comprises a plurality of electronic components. Each of the plurality of electromechanical actuators is operatively connected to a corresponding one of the plurality of electronic components.

In addition to one or more of the features described above, or as an alternative, in further embodiments each of the plurality of electromechanical actuators are operatively connected to a corresponding one of the plurality of rotor blades.

In addition to one or more of the features described above, or as an alternative, in further embodiments a cover member extends across the aerodynamic faring enclosing the component receiving zone.

In addition to one or more of the features described above, or as an alternative, in further embodiments the cover member creates a trapped air volume in the component receiving zone.

In addition to one or more of the features described above, or as an alternative, in further embodiments the cover member includes one or more vents forming a circulating air volume in the component receiving zone.

The foregoing features and elements may be combined in various combinations without exclusivity, unless expressly indicated otherwise. These features and elements as well as the operation thereof will become more apparent in light of the following description and the accompanying drawings. However, it should be understood that the following description and drawings are intended to be exemplary in nature and non-limiting.
FIG. 1 depicts a rotary wing aircraft including a heat dissipation system, in accordance with an aspect of an exemplary embodiment;
FIG. 2 depicts the heat dissipation system, in accordance with an aspect of an exemplary embodiment;
FIG. 3 depicts the heat dissipation system, in accordance with another aspect of an exemplary embodiment;
FIG. 4 depicts the heat dissipation system, in accordance with yet another aspect of an exemplary embodiment;
FIG 5 depicts a heat dissipation system, in accordance with still yet another aspect of an exemplary embodiment; and
FIG. 6 depicts a heat dissipation system, in accordance with another aspect of an exemplary embodiment.

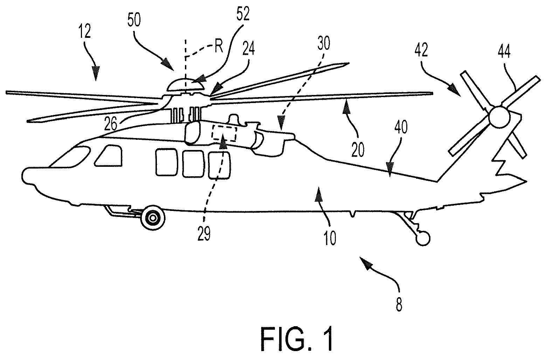

A vertical takeoff and landing (VTOL) or rotary wing aircraft, in accordance with an exemplary embodiment, is generally indicated at 8 in FIG. 1. Rotary wing aircraft 8 including a fuselage 10 that supports a main rotor system 12, which rotates about a main rotor axis R. Main rotor system 12 includes a plurality of rotor blades 20 rotatable about a main rotor axis "R". Plurality of rotor blades 20 is mounted to a rotor hub 24. Each of the plurality of rotor blades 20 may be connected to a corresponding one of a plurality of electromechanical actuators, one of which is indicated at 26 that form part of an individual blade control (IBC) system 27.

The IBC system typically includes a flight control computer (not shown) located in fuselage 12 in addition to power and control electronics 28 up at rotor hub 24. Power and control electronics 28 convert flight control commands into signals that drive electromechanical actuators 26 to adjust a position of each of the plurality of rotor blades 20 through the air. In addition, it should be understood that power and control electronics 28 may form part of a hub mounted vibration suppression (HMVS) system (not shown). The HMVS system reduces vibrations that may occurs due to operation of main rotor system. Details of the HMVS system may be found in U.S. Patent No. 8, 403,643 dated March 26, 2013, incorporated herein by reference in its entirety.Main rotor system 12 is driven by a gearbox 29 coupled to one or more prime movers, indicated generally at 30. Aircraft 8 includes an extending tail 40 that supports a tail rotor system 42 including a plurality of tail rotor blades, indicated generally at 44. Tail rotor system 42 may be operatively coupled to gearbox 29 through a drive shaft (not shown). A heat dissipation system 50 is mounted to rotor hub 24 outwardly of the plurality of rotor blades 30.

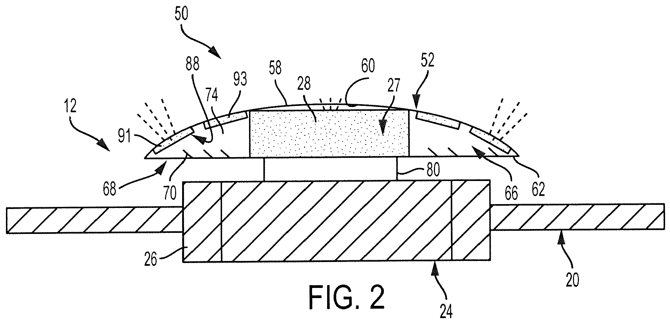

As shown in FIG. 2, heat dissipation system 50 takes the form of an aerodynamic faring 52 having an outer surface 58, an inner surface 60 and an outer perimetric edge 62. As will be detailed herein, power and control electronics 28 and electromechanical actuators 26 generate heat. Further, rotor head 24 is enclosed in aerodynamic fairing 52 to maintain low drag thereby increasing flight efficiency at high speed. Aerodynamic fairing 52 blocks airflow and making heat removal difficult. Heat dissipation system 50 provides a mechanism for removing heat that may exist up in aerodynamic fairing 52.

Inner surface 60 defines a component receiving zone 66. In accordance with an exemplary aspect, aerodynamic faring 52 includes a cover member 68 that extends across outer perimetric edge 62. Cover member 68 may include one or more vents 70 that define a circulating air volume 74 in component receiving zone 66. Aerodynamic faring 52 is spaced from rotor hub 24 through a mounting flange 80.

In further accordance with an exemplary aspect, a plurality of electronic components indicated generally at 88 is mounted to inner surface 60. Power and control electronics 29 may also mounted to inner surface 60. It should be understood that plurality of electronic components 88 may be mounted directly to inner surface 60. In accordance with an exemplary aspect, electronic components 88 may include a packaging (not separately labeled) that closely conforms to surface profile (also not separately labeled) of inner surface 60. Plurality of electronic components 88 may include power components 91 and control components 93. Power components 91 and control components 93 may be operatively connected with electromechanical actuators 26. Aerodynamic faring 52 promotes a heat exchange between the plurality of electronic components 88 and ambient.

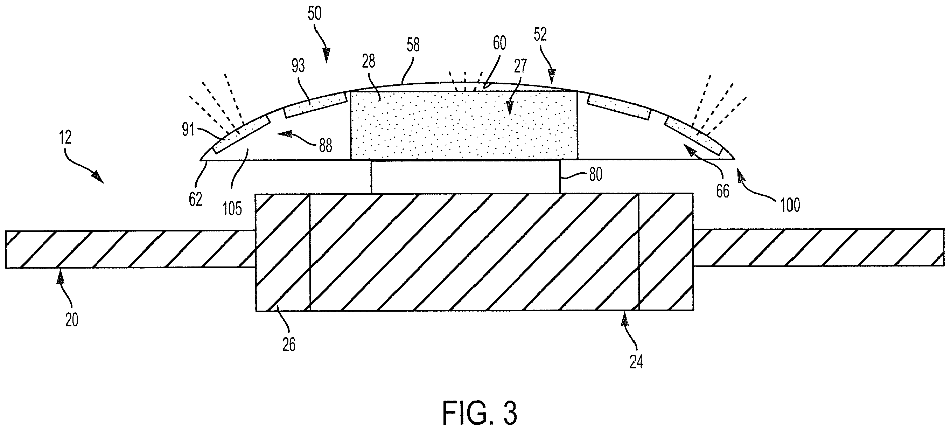

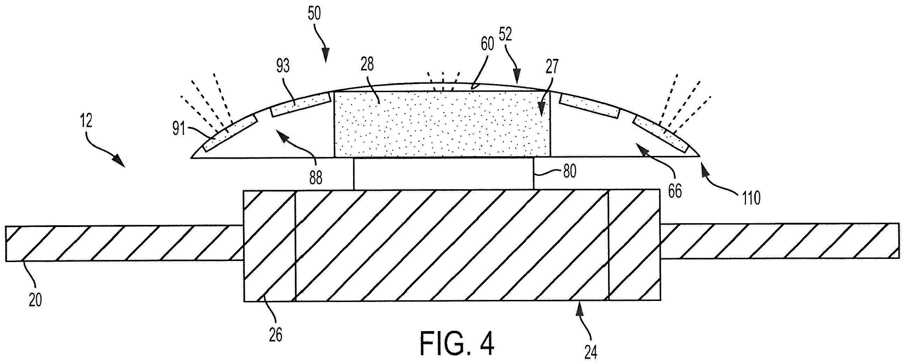

At this point it should be understood that heat dissipation system 50 may take on a variety of aerodynamic shapes and should not be limited to the particular shape shown. Further, various changes and/or modifications may be made to the heat dissipation system. For example, in FIG. 3, wherein like reference numbers represent corresponding parts in the respective views, a cover 100 is arranged across outer perimetric edge 62. Cover 100 does not include any openings and forms a trapped air volume 105 in component receiving zone 66. In accordance with another aspect, outer perimetric edge 66 may define an opening 110 as shown in FIG. 4.

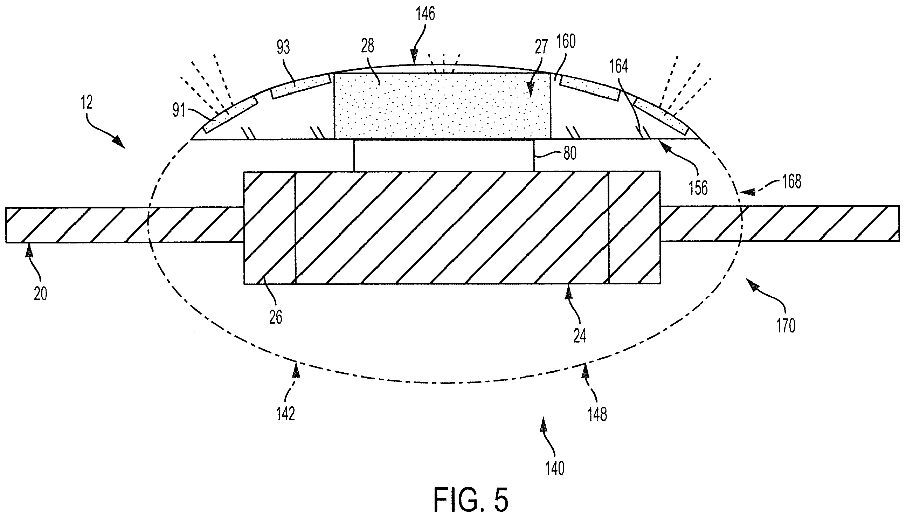

Other exemplary aspects are shown in FIG. 5 wherein like reference numbers represent corresponding parts in the respective views. For example, a heat dissipation system 140 may include an aerodynamic fairing 142 having an upper portion 146 and a lower portion 148 that interconnect to encapsulate rotor hub 24. A surface 156 may extend across upper portion 146 to form a component receiving zone 160. Surface 156 may include one or more vents, one of which is indicated at 164. First openings 168 may be formed in upper portion 146 and second openings 170 may be formed in lower portion 170. First and second openings 168 and 170 allow air to pass into component receiving zone 160 via vents 164 to promote cooling of power components 91 and control components 93. It should be understood that additional heat producing components could be arranged in lower portion 148.

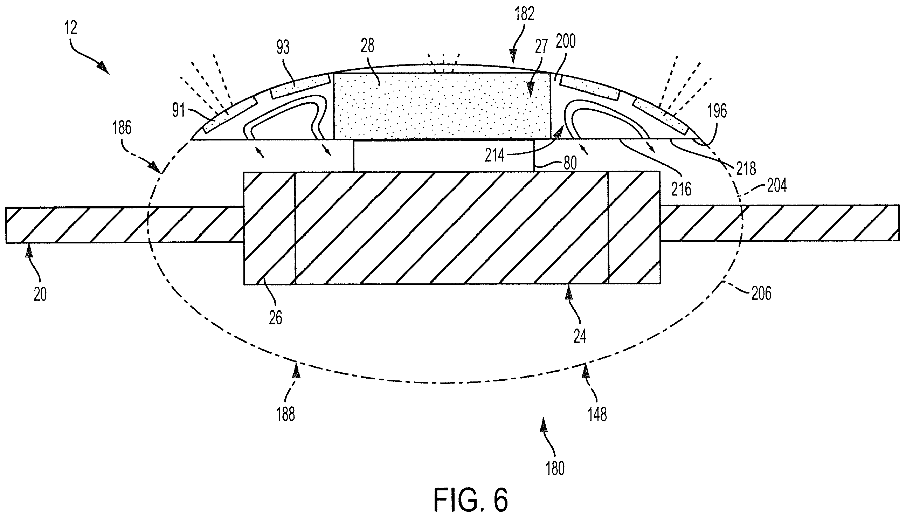

Reference will now follow to FIG. 6, wherein like reference numbers represent corresponding parts in the respective views. A heat dissipation system, in accordance with another exemplary aspect, is indicated generally at 180. Heat dissipation system 180 includes an aerodynamic fairing 182 having an upper portion 186 and a lower portion 188 that interconnect to encapsulate rotor hub 24. A surface 196 may extend across upper portion 186 forming a component receiving zone 200. Upper portion 186 may include first openings 204 and lower portion 188 may include second openings 206. First and second openings 204 and 206 provide a pathway for fluid to enter into aerodynamic fairing 182.

In the exemplary embodiment shown, a plurality of closed loop cooling passages, one of which is indicated at 214, is provided in component receiving zone 200. Closed loop cooling passage 214 includes an inlet 216 and an outlet 218 formed in surface 196. Closed loop cooling passage 214 guides fluid, such as air, into component receiving zone 200 in proximity to power components 91 and control components 93 to promote additional cooling.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions or equivalent arrangements not heretofore described, but which are commensurate with the spirit and scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A hub for a rotary wing aircraft comprising:
a plurality of rotor blades;
a heat dissipation system including an aerodynamic faring arranged outwardly of the hub, the aerodynamic fairing having an outer surface and an inner surface defining a component receiving zone; and
an electronic component mounted to the inner surface of the aerodynamic faring in the component receiving zone.

2. The hub according to claim 1, wherein the electronic component closely conforms to the inner surface of the aerodynamic faring.

3. The hub according to claim 1 or 2, further comprising: a plurality of electromechanical actuators mounted to the hub and wherein the electronic component comprises a plurality of electronic components, each of the plurality of electromechanical actuators being operatively connected to a corresponding one of the plurality of electronic components.

4. The hub according to claim 3, wherein each of the plurality of electromechanical actuators are operatively connected to a corresponding one of the plurality of rotor blades.

5. The hub according to one of claims 1 - 4, further comprising: a cover member extending across the aerodynamic faring enclosing the component receiving zone.

6. The hub according to claim 5, wherein the cover member creates a trapped air volume in the component receiving zone.

7. The hub according to claim 5 or 6, wherein the cover member includes one or more vents forming a circulating air volume in the component receiving zone.

8. The hub according to one of claims 1 - 7, wherein the aerodynamic faring is spaced from the hub through a mounting flange.

9. A rotary wing aircraft comprising:
a fuselage including an extending tail;
a prime mover mounted to the fuselage;
a gearbox mechanically connected to the prime mover; and
a main rotor system mounted to the fuselage and mechanically connected to the gearbox, the main rotor system including a rotor hub, particularly according to one of the preceding claims, comprising:
a plurality of rotor blades;
an aerodynamic faring arranged outwardly of the rotor hub, the aerodynamic fairing having an outer surface and an inner surface defining a component receiving zone; and
an electronic component mounted to the inner surface of the aerodynamic faring in the component receiving zone.

10. The rotary wing aircraft according to claim 9, wherein the electronic component closely conforms to the inner surface of the aerodynamic faring.

11. The rotary wing aircraft according to claim 9 or 10, further comprising: a plurality of electromechanical actuators mounted to the rotor hub and the electronic component comprises a plurality of electronic components, each of the plurality of electromechanical actuators being operatively connected to a corresponding one of the plurality of electronic components.

12. The rotary wing aircraft according to claim 11, wherein each of the plurality of electromechanical actuators are operatively connected to a corresponding one of the plurality of rotor blades.

13. The rotary wing aircraft according to one of claims 9 - 12, further comprising: a cover member extending across the aerodynamic faring enclosing the component receiving zone.

14. The rotary wing aircraft according to claim 13, wherein the cover member creates a trapped air volume in the component receiving zone.

15. The rotary wing aircraft according to claim 13 or 14, wherein the cover member includes one or more vents forming a circulating air volume in the component receiving zone.
